(19) Europäisches Patentamt
European Patent Office
Office européen des brevets

(11) **EP 4 744 766 A1**

(12) **EUROPEAN PATENT APPLICATION**
published in accordance with Art. 153(4) EPC

(43) Date of publication:
**20.05.2026 Bulletin 2026/21**

(21) Application number: **23950437.6**

(22) Date of filing: **31.10.2023**

(51) International Patent Classification (IPC):
**B01J 13/02** (2006.01)     **C08L 95/00** (2006.01)

(52) Cooperative Patent Classification (CPC):
**B01J 13/02; C08K 5/05; C08K 5/07; C08K 5/101; C08K 5/13; C08K 9/10; C08L 91/00; C08L 95/00**

(86) International application number:
**PCT/CN2023/128305**

(87) International publication number:
**WO 2025/043864 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.09.2023 CN 202311125654**

(71) Applicants:
- **China Petroleum & Chemical Corporation Beijing 100728 (CN)**
- **Sinopec Dalian Research Institute of Petroleum and Petrochemicals Co., Ltd. Lushunkou District Dalian, Liaoning 116045 (CN)**

(72) Inventors:
- **SONG, Lechun**
  **Dalian, Liaoning 116045 (CN)**
- **WANG, Xingyue**
  **Dalian, Liaoning 116045 (CN)**
- **CAO, Peng**
  **Dalian, Liaoning 116045 (CN)**
- **LI, Chenze**
  **Dalian, Liaoning 116045 (CN)**
- **LI, Zhijun**
  **Dalian, Liaoning 116045 (CN)**

(74) Representative: **Hoffmann Eitle Patent- und Rechtsanwälte PartmbB Arabellastraße 30 81925 München (DE)**

(54) **MICROCAPSULE, PREPARATION METHOD THEREFOR, AND USE THEREOF**

(57) A microcapsule, a preparation method therefor, and a use thereof. The microcapsule comprises a capsule core and a capsule wall. The capsule core is wrapped in the capsule wall. The capsule core contains an active component. The elastic modulus of the microcapsule and the thickness of the capsule wall satisfy the following formula: $Y=0.42X^2-0.92X+T$, wherein Y is the elastic modulus of the microcapsule, and the unit thereof is GPa; X is the thickness of the capsule wall, and the unit thereof is $\mu m$; and T is $1\pm0.1$. The elastic modulus of the microcapsule is obtained by performing a mechanical property test on the microcapsule by using a nano-indentation instrument. The thickness of the capsule wall is obtained by performing frozen section on the microcapsule by using a scanning electron microscope. The microcapsule is suitable for pavement asphalt, and the self-repairing efficiency of a pavement asphalt material can be effectively improved. In addition, in a process of asphalt construction, the emission of an asphalt flue gas can be effectively reduced and the pollution to the environment is reduced.

FIG. 1

**Description**

**CROSS-REFERENCE TO RELATED APPLICATIONS**

The application claims the benefit of the Chinese patent application No. "202311125654.2", filed on September 1, 2023, the content of which is specifically and entirely incorporated herein by reference.

**TECHNICAL FIELD**

The present invention relates to the technical field of microcapsule material, in particular to a microcapsule, a preparation method therefor, and a use thereof, more particularly to a microcapsule, a preparation method thereof, and an use of the microcapsule in pavement asphalt.

**BACKGROUND ART**

The interior of asphalt pavement is prone to forming micro-cracks and localized damages during the using process, resulting from the load of vehicles and environmental factors; if the micro-cracks are not timely controlled, the micro-cracks may expand and fracture under the effect of outside load, causing the formation of macro-cracks; the water seepage at the cracks may further exacerbate the damages of pavement structure, such that the pavement cannot reach the designed service life. Since the micro-cracks generally form in the interior of the asphalt pavement, it is very difficult to timely discover the microscopic damage, and it is almost impossible to carry out the human-induced restoration, thus the restoration of incipient cracks can hardly be implemented, the deterioration of micro-cracks will result in the macro-cracks or even cause structural fracture. The current repair method merely carries out the remedial measures after the obvious cracks appear on the pavement surface, although the repair operation can solve the existing problems, it will inevitably bring about some interferences to the traffic, causing losses in many aspects such as manpower, material resources.

Automatic repair of the pavement cracks can be achieved by adopting the microcapsule technology in asphalt and encapsulating a healant in the microcapsule. When the asphalt forms micro-cracks due to aging or loading, the microcapsules in the crack path will rupture due to expansion of tip stress. The healant is released from the microcapsule wall and flows along the micro-cracks and then permeates and diffuses to both sides of the micro-cracks due to the drive of capillary action, causing the micro-cracks to disappear gradually, eventually resulting in self-repair effect of the asphalt. During the using process of asphalt pavement, the microcapsules shall have enough strength to avoid their rupture during the process of blending the asphalt mixture, however, if the microcapsules are too strong, when the micro-cracks appear on the asphalt pavement, the cracks is apt to bypass the microcapsules and expand forwardly, the microcapsules can hardly rupture to exert their repair effect.

Chinese patent application CN104231642A discloses an asphalt crack self-repair microcapsule containing a regenerating agent and a preparation method thereof, the method uses the polyurea formaldehyde resin as a wall material and uses the asphalt regenerating agent as a core material, an asphalt crack self-repair microcapsule is prepared, which can enhance the self-repairing capability of the asphalt pavement surface to some extent, however, the method has the defects that the microcapsule is not tightly bound to the asphalt, there is a common phenomenon that the microcapsule can hardly rupture, thereby affecting the self-repairing efficiency of the microcapsule.

In view of the above, the prior art does not consider the bonding strength of the microcapsule and asphalt, but simply adding the microcapsule into asphalt, the two materials cannot be effectively integrated, so that the microcapsule is apt to separate from the asphalt, further exacerbating the occurrence of a phenomenon that the microcapsule can hardly fracture.

Further, the asphalt pavement is a main type of expressway, the traditional hot mixing and hot paving process is still used in the pavement construction operations, the asphalt will contact with oxygen gas in the air and carry out reaction during the construction operations, on one hand, a condensation reaction is implemented to form polycyclic aromatic hydrocarbons having a higher molecular weight, which are further condensed into a gel, an asphalt substance; on the other hand, the asphalt molecules are decomposed under the heating condition to generate compounds having a lower molecular weight, which will form asphalt flue gas through volatilization, thereby imposing serious damages to the ecological balance, polluting the environment and injuring the health of human body.

Considering the disorganized release of Volatile Organic Compounds (VOCs) during the paving process of asphalt pavement, it is difficult to conduct the collection and treatment of VOCs in the whole process, therefore, it is urgent to solve the problem concerning how to explore the solutions for fundamentally reducing the emission of asphalt flue gas, carrying out the clean construction operation of asphalt pavement, and ensuring the harmonious development of the transport sector and the social economy.

## SUMMARY OF THE INVENTION

The present invention aims to provide a new microcapsule, a preparation method therefor and a use thereof, in order to overcome the defects in the prior art that the microcapsule material cannot effectively integrate with the asphalt after the addition process, and the microcapsule is prone to separation from the asphalt. The microcapsule provided by the present invention not only has a high strength, can meet the use requirements of pavement surface, but also exhibits the desirable bonding strength with asphalt.

In order to achieve the above object, the first aspect of the present invention provides a microcapsule, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is $1\pm0.1$;

The elastic modulus of the microcapsule is obtained by performing a mechanical property test on the microcapsule by using a nano-indentation instrument, and the thickness of the capsule wall is obtained by performing frozen section test on the microcapsule by using a scanning electron microscope.

Preferably, the content of the capsule core is within the range of 27-53wt.%, and the content of the capsule wall is within the range of 47-73wt.%, based on the total weight of the microcapsule.

Preferably, the active component is a healant for self-repairing of pavement cracks and/or an inhibitor for inhibiting the release of an asphalt flue gas.

Preferably, the healant for self-repairing of pavement cracks is an aromatic hydrocarbon-rich component.

Preferably, the aromatic hydrocarbon-rich component is at least one selected from the group consisting of fluidized catalytic cracking slurry, vacuum distillate oil from line 4, furfural extract oil and waste lubricating oil.

Preferably, the aromatic hydrocarbon-rich component has a content of aromatic hydrocarbons within the range of 45-65wt.%.

Preferably, the inhibitor for inhibiting the release of an asphalt flue gas is at least one selected from the group consisting of aldehyde compounds, ketone compounds, alcohol compounds, phenol compounds and ester compounds.

Preferably, the aldehyde compound is selected from the group consisting of fatty aldehyde having 7 or more carbon atoms and aromatic aldehyde having 6 or more carbon atoms, more preferably at least one selected from the group consisting of p-methyl benzaldehyde, decyl aldehyde, o-carboxy benzaldehyde, p-isopropyl benzaldehyde, cinnamyl aldehyde, p-hydroxy benzaldehyde, p-methoxy benzaldehyde, 2-methyl-3-(3,4-methylene-dioxyphenyl) propyl aldehyde, 3,4-methylene dioxy benzaldehyde, 3-(4-isopropyl phenyl)-2-methyl propyl aldehyde, ethyl vanillin, phenyl acetaldehyde, anisaldehyde, nonadien-2,6-aldehyde, 2,6-dimethyl-2,6-octadienal, vanillin, citronellal, neral, hydroxyl methyl pentyl cyclohexene acetal, p-diethylamino benzaldehyde, and undecylenal.

Preferably, the ketone compound is selected from the group consisting of aliphatic ketones having 8 or more carbon atoms and aromatic ketones having 8 or more carbon atoms, more preferably at least one selected from the group consisting of 6-methyl-3,5-heptadiene-2-one, 2-undecanone, acetophenone, ionone, irone, methyl ionone, damascenone and dihydro damascenone.

Preferably, the alcohol compound is alcohol with more than 6 carbon atoms, more preferably at least one selected from the group consisting of cinnamyl alcohol, menthol, cis-3,7-dimethyl-2,6-octanedienol, citronellol, geraniol, myrcenol, 2,6,10-trimethyl-2,6,10-dodecatrien-12-ol, lavender alcohol, benzyl alcohol, 2-phenyl ethanol, dihydromyrcenol, tetrahydrogeraniol and neralidol.

Preferably, the phenol compound is phenol having 6 or more carbon atoms, more preferably at least one selected from the group consisting of thymol, ethyl maltol, methyl maltol, 3-propenyl-6-ethoxyphenol and isoeugenol.

Preferably, the ester compound is an ester with more than 7 carbon atoms, more preferably at least one selected from the group consisting of methyl salicylate, methyl cinnamate, ethyl cinnamate, ethyl phenylacetate, methyl phenylacetate, geranyl phenylacetate, phenethyl phenylacetate, isoamyl phenylacetate, benzyl salicylate, p-methylbenzyl acetate, benzyl acetate, isobutyl benzoate, isoamyl salicylate, benzyl cinnamate, phenethylethyl cinnamate, linalyl formate, linalyl acetate, linalyl isobutyrate, menthyl acetate, terpinyl acetate and bornyl acetate.

Preferably, the thickness of the capsule wall is within the range of 0.5-5$\mu$m.

Preferably, the capsule wall comprises an inner layer made of resin and an outer layer made of rubber material.

Preferably, the mass ratio of the inner layer to the outer layer is (2.4-5):1.

Preferably, the resin is at least one selected from the group consisting of melamine resin, urea formaldehyde resin and polymethyl methacrylate, more preferably melamine resin.

Preferably, the rubber material is at least one selected from the group consisting of chlorinated rubber, styrene-butadiene rubber and chloroprene rubber.

Preferably, the size of the microcapsule is 50μm or less, more preferably 20μm or less, further preferably within the range of 3-15μm.

The second aspect of the present invention provides a method for preparing the microcapsule, the method comprises the following steps:

(1) Blending an active component, an emulsifier and water to form an oil-in-water emulsion;
(2) Reacting the oil-in-water emulsion with a resin pre-polymer, then filtering, washing and drying to obtain a pre-coat material;
(3) Mixing a rubber material with the pre-coat material in the presence of a volatile solvent, and then mixing the obtained mixture with water, raising the temperature till volatilization of the volatile solvent to prepare a microcapsule.

Preferably, the mass ratio of the dosages of the active component, the emulsifier and water in step (1) is 1: (0.05-0.09): (6-9).

Preferably, the pH of the oil-in-water emulsion in step (2) is adjusted to 5 or less, more preferably 2-4, before reacting the oil-in-water emulsion with the resin pre-polymer.

Preferably, the resin pre-polymer in step (2) is a melamine resin pre-polymer.

Preferably, the preparation method for melamine resin pre-polymer comprises: dissolving and mixing melamine with a formaldehyde solution and water, adjusting the pH to 7.5-9.5, and then carrying out the reaction under the stirring and constant temperature water bath condition of 60-90°C for 0.5-3.5h.

Preferably, the formaldehyde solution has a concentration within the range of 30-40 wt.%.

Preferably, the mass ratio of dosages of the melamine, the formaldehyde solution and water is 1: (2-3): (8-10).

Preferably, the mass ratio of the dosages of the rubber material, the volatile solvent and water in step (3) is 1: (10-20): (50-150).

Preferably, the active component is at least one selected from the group consisting of aromatic hydrocarbon-rich component, aldehyde compounds, ketone compounds, alcohol compounds, phenol compounds and ester compounds, or a combination thereof.

Preferably, the rubber material is at least one selected from the group consisting of chlorinated rubber, styrene-butadiene rubber and chloroprene rubber.

Preferably, the emulsifier is at least one selected from the group consisting sodium stearate, sodium lauryl sulphate, sodium dodecyl benzene sulfonate, cetyl trimethyl ammonium chloride, cetyl trimethyl ammonium bromide, cetyl dimethyl hydroxyethyl ammonium chloride, nonylphenol polyoxyethylene ether, octylphenol polyoxyethylene ether, and cetyl polyoxyethylene ether.

Preferably, the volatile solvent is at least one selected from the group consisting carbon tetrachloride, methylene dichloride and trichloroethylene.

The third aspect of the present invention provides a microcapsule prepared with the aforementioned method.

The fourth aspect of the present invention provides an use of the aforementioned microcapsule in pavement asphalt.

According to the microcapsule of the present invention, the elastic modulus of the microcapsule and the thickness of the capsule wall meet the specific functional relationship, and in actual use, the elastic modulus of the microcapsule can be controlled within the desired parameter ranges by adjusting the thickness of the capsule wall.

In a preferred embodiment, the active component in the capsule core is selected as a healant for self-repairing of pavement cracks, and the capsule wall comprises an inner layer made of resin and an outer layer made of rubber material. The microcapsule of the preferred embodiment is particularly suitable for use in pavement asphalt, on the one hand, the capsule has a certain strength that meets the requirements of pavement use; on the other hand, the rubber material, as an outer layer of the capsule wall, can be effectively integrated with asphalt, the rubber material has excellent adhesion and forms a strong bonding with the resin (particularly melamine resin) as an inner layer of the capsule wall, when cracks appear on the asphalt pavement, the bonding can effectively improves the rupture possibility of the material, the tearing of an outer layer of the capsule wall brings forth tearing of an inner layer of the capsule wall, such that the healant is released to fulfill the purpose of self-repairing. The two types of capsule wall materials may complement the advantages, thereby effectively improving the self-repairing efficiency of pavement asphalt material.

In another preferred embodiment, the active component in the capsule core is selected as an inhibitor for inhibiting the release of an asphalt flue gas, and the capsule wall comprises an inner layer made of resin and an outer layer made of rubber material. The microcapsule of this preferred embodiment is particularly suitable for use in the pavement asphalt, a structure of the microcapsule is capable of extending the action time of the active component, allowing the longer storage and service life of the pavement asphalt, can effectively reduce the emission of an asphalt flue gas and reduce pollution to the environment during the process of asphalt construction.

**BRIEF DESCRIPTION OF THE DRAWINGS**

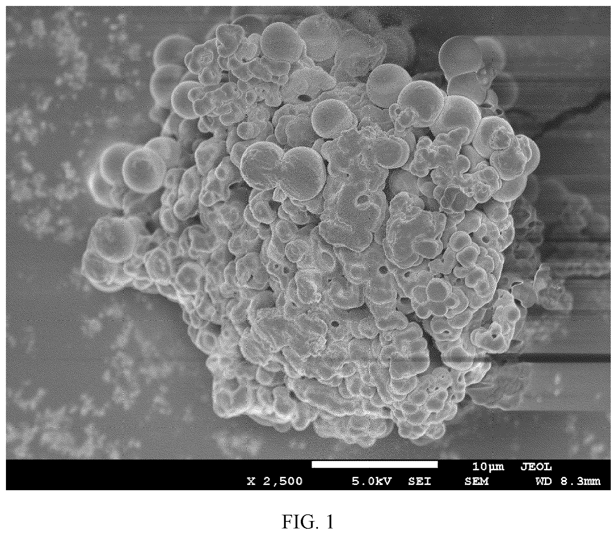

FIG. 1 illustrates a Scanning Electron Microscope (SEM) image of the microcapsule prepared in Example 1.

**DESCRIPTION OF THE PREFERRED EMBODIMENT**

The specific embodiments of the present invention will be described in detail below. It should be understood that the specific embodiments described herein merely serve to illustrate and explain the present invention, instead of imposing limitations thereto.

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The microcapsule according to the present invention comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is $1\pm0.1$;

The elastic modulus of the microcapsule is obtained by performing a mechanical property test on the microcapsule by using a nano-indentation instrument, and the thickness of the capsule wall is obtained by performing frozen section test on the microcapsule by using a scanning electron microscope.

In the microcapsule according to the invention, the thickness of the capsule wall may be within the range of 0.5-5$\mu$m, specifically, for example, the thickness may be 0.5$\mu$m, 0.6$\mu$m, 0.7$\mu$m, 0.8$\mu$m, 0.9$\mu$m, 1$\mu$m, 1.1$\mu$m, 1.2$\mu$m, 1.3$\mu$m, 1.4$\mu$m, 1.5$\mu$m, 1.6$\mu$m, 1.7$\mu$m, 1.8$\mu$m, 1.9$\mu$m, 2$\mu$m, 2.1$\mu$m, 2.2$\mu$m, 2.3$\mu$m, 2.4$\mu$m, 2.5$\mu$m, 2.6$\mu$m, 2.7$\mu$m, 2.8$\mu$m, 2.9$\mu$m, 3$\mu$m, 3.1$\mu$m, 3.2$\mu$m, 3.3$\mu$m, 3.4$\mu$m, 3.5$\mu$m, 3.6$\mu$m, 3.7$\mu$m, 3.8$\mu$m, 3.9$\mu$m, 4$\mu$m, 4.1$\mu$m, 4.2$\mu$m, 4.3$\mu$m, 4.4$\mu$m, 4.5$\mu$m, 4.6$\mu$m, 4.7$\mu$m, 4.8$\mu$m, 4.9$\mu$m, or 5$\mu$m.

In some embodiments, the thickness of the capsule wall is within the range of 0.5-2$\mu$m, preferably within the range of 0.5-1.5$\mu$m. The capsule wall of the microcapsule in the embodiments is relatively thin, and the elastic modulus of the microcapsule is small, it is suitable for the application scenarios that the immediate release of the active component in the capsule core is desired.

In yet other embodiments, the thickness of the capsule wall is within the range of 2-3$\mu$m. The thickness of the capsule wall in the embodiments is moderate, and the elastic modulus of the microcapsule is moderate, it is suitable for the application scenarios that it is necessary to release the active component in the capsule core in a modest speed.

In yet other embodiments, the thickness of the capsule wall is within the range of 3-5$\mu$m. The capsule wall of the microcapsule in the embodiments is relatively thick, and the elastic modulus of the microcapsule is large, it is suitable for the application scenarios that the slow release of the active component in the capsule core is desired.

In the microcapsule according to the present invention, the size of the microcapsule may be 50$\mu$m or less, preferably 20$\mu$m or less, more preferably within the range of 3-15$\mu$m.

In the microcapsule of the invention, the content of the capsule core may be within the range of 27-53wt.%, and the content of the capsule wall may be within the range of 47-73wt.%, based on the total weight of the microcapsule. In some embodiments, the content of the capsule core may be within the range of 40-53wt.%, and the content of the capsule wall may be within the range of 47-60wt. %, based on the total weight of the microcapsule. In other embodiments, the content of the capsule core may be within the range of 30-40wt.%, and the content of the capsule wall may be within the range of 60-70wt. %, based on the total weight of the microcapsule. In yet other embodiments, the content of the capsule core may be within the range of 27-30wt.%, and the content of the capsule wall may be within the range of 70-73wt.%, based on the total weight of the microcapsule.

In the microcapsule according to the invention, the active component may be various conventional active components in the slow-release application scenarios. In some embodiments, the active component is a healant for self-repairing of pavement cracks and/or an inhibitor for inhibiting the release of an asphalt flue gas. When the active component in the microcapsule is a healant for self-repairing of pavement cracks, if cracks appear on the asphalt pavement, the active component can effectively improves the rupture possibility of the material, the tearing of an outer layer of the capsule wall brings forth tearing of an inner layer of the capsule wall, such that the healant is released to fulfill the purpose of self-repairing. When the active component in the capsule core is an inhibitor for inhibiting the release of an asphalt flue gas, a structure of the microcapsule is capable of extending the action time of the active component, allowing the longer storage and service life of the pavement asphalt, thereby effectively reducing the emission of an asphalt flue gas and reducing pollution to the environment during the process of asphalt construction.

In the present invention, the healant for self-repairing of pavement cracks is preferably an aromatic hydrocarbon-rich component. The aromatic hydrocarbon-rich component refers to a material having a content of aromatic hydrocarobons more than 40 wt.%. As a specific material choice, the aromatic hydrocarbon-rich component may be at least one selected from the group consisting of fluidized catalytic cracking (FCC) slurry, vacuum distillate oil from line 4, furfural extract oil and waste lubricating oil. In a case of preferably, the aromatic hydrocarbon-rich component has a content of aromatic hydrocarbons within the range of 45-65wt.%, more preferably within the range of 50-60wt. %, further preferably within the range of 52-56wt. %.

In the present invention, the inhibitor for inhibiting the release of an asphalt flue gas is preferably at least one selected from the group consisting of aldehyde compounds, ketone compounds, alcohol compounds, phenol compounds and ester compounds.

In the present invention, the aldehyde compound may be at least one selected from the group consisting of fatty aldehyde having 7 or more carbon atoms and aromatic aldehyde having 6 or more carbon atoms. In a case of preferably, the aldehyde compound is at least one selected from the group consisting of C7-C13 fatty aldehyde and C6-C13 aromatic aldehyde. Specifically, the aldehyde compound is at least one selected from the group consisting of p-methyl benzaldehyde, decyl aldehyde, o-carboxy benzaldehyde, p-isopropyl benzaldehyde, cinnamyl aldehyde, p-hydroxy benzaldehyde, p-methoxy benzaldehyde, 2-methyl-3-(3,4-methylene-dioxyphenyl) propyl aldehyde, 3,4-methylene dioxy benzaldehyde, 3-(4-isopropyl phenyl)-2-methyl propyl aldehyde, ethyl vanillin, phenyl acetaldehyde, anisaldehyde, nonadien-2,6-aldehyde, 2,6-dimethyl-2,6-octadienal, vanillin, citronellal, neral, hydroxyl methyl pentyl cyclohexene acetal, p-diethylamino benzaldehyde, and undecylenal.

In the present invention, the ketone compound may be at least selected from the group consisting of aliphatic ketones having 8 or more carbon atoms and aromatic ketones having 8 or more carbon atoms. In a case of preferably, the ketone compound is at least one selected from the group consisting of C8-C11 aliphatic ketone and C8-C14 aromatic ketone. Specifically, the ketone compound is at least one selected from the group consisting of 6-methyl-3,5-heptadiene-2-one, 2-undecanone, acetophenone, ionone, irone, methyl ionone, damascenone and dihydro damascenone.

In the present invention, the alcohol compound is alcohol with more than 6 carbon atoms, preferably C7-C15 alcohol. Specifically, the alcohol compound is at least one selected from the group consisting of cinnamyl alcohol, menthol, cis-3,7-dimethyl-2,6-octanedienol, citronellol, geraniol, myrcenol, 2,6,10-trimethyl-2,6,10-dodecatrien-12-ol, lavender alcohol, benzyl alcohol, 2-phenyl ethanol, dihydromyrcenol, tetrahydrogeraniol and neralido.

In the present invention, the phenol compound is phenol having 6 or more carbon atoms, preferably a phenol having 6-15 carbon atoms. Specifically, the phenol compound is at least one selected from the group consisting of thymol, ethyl maltol, methyl maltol, 3-propenyl-6-ethoxyphenol and isoeugenol.

In the present invention, the ester compound is ester with more than 7 carbon atoms, preferably an ester having 8-17 carbon atoms. Specifically, the ester compound is at least one selected from the group consisting of methyl salicylate, methyl cinnamate, ethyl cinnamate, ethyl phenylacetate, methyl phenylacetate, geranyl phenylacetate, phenethyl phenylacetate, isoamyl phenylacetate, benzyl salicylate, p-methylbenzyl acetate, benzyl acetate, isobutyl benzoate, isoamyl salicylate, benzyl cinnamate, phenethylethyl cinnamate, linalyl formate, linalyl acetate, linalyl isobutyrate, menthyl acetate, terpinyl acetate and bornyl acetate.

In the microcapsule of the present invention, in a case of preferably, the capsule wall comprises an inner layer made of resin and an outer layer made of rubber material. In the case of preferably, the microcapsule material is particularly suitable for use in pavement asphalt, on the one hand, the capsule has a certain strength that meets the requirements of pavement use; on the other hand, the rubber material, as an outer layer of the capsule wall, can be effectively integrated with asphalt, the rubber material has excellent adhesion and forms a strong bonding with the resin (particularly melamine resin) as an inner layer of the capsule wall, when cracks appear on the asphalt pavement, the bonding can effectively improves the rupture possibility of the material, the tearing of an outer layer of the capsule wall brings forth tearing of an inner layer of the capsule wall, such that the healant is released to fulfill the purpose of self- repairing.

Further preferably, the mass ratio of the inner layer to the outer layer is (2.4-5): 1; specifically, for example, the mass ratio is 2.4: 1, 2.5: 1, 2.6: 1, 2.7: 1, 2.8: 1, 2.9: 1, 3: 1, 3.1: 1, 3.2: 1, 3.3: 1, 3.4: 1, 3.5: 1, 3.6: 1, 3.7: 1, 3.8: 1, 3.9: 1, 4: 1, 4.1: 1, 4.2: 1, 4.3: 1, 4.4: 1, 4.5: 1, 4.6: 1, 4.7: 1, 4.8: 1, 4.9: 1 or 5: 1.

In the present invention, the content of the capsule core in the microcapsule, the content of the capsule wall, and the mass of the inner and outer layers of the capsule wall of the microcapsule are measured with the following method: adding the microcapsule into a volatile solvent (the volatile solvent may be at least one selected from the group consisting of carbon tetrachloride, methylene dichloride and trichloroethylene), and after sufficient dissolution and filtration, subjecting the obtained first solid powder to sufficient drying, such that the mass difference between the first solid powder and the initial microcapsule is denoted as the mass of an outer layer of capsule wall; further subjecting the obtained first solid powder to sufficient milling, and adding it into toluene, after sufficient dissolution and filtration, subjecting the resulting second solid powder to sufficient drying, such that the mass difference between the second solid powder and the first solid powder is denoted as the mass of capsule core; the mass of the inner layer of capsule wall is obtained by subtracting the mass of the microcapsule by the mass of an outer layer of the capsule wall outer layer and the mass of the capsule core.

In the present invention, the resin may be at least one selected from the group consisting of melamine resin, urea formaldehyde resin and polymethyl methacrylate, most preferably melamine resin.

In the invention, the rubber material may be at least one selected from the group consisting of chlorinated rubber, styrene-butadiene rubber and chloroprene rubber.

In some specific embodiments of the invention, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is 1±0.1;

The thickness of the capsule wall is within the range of 0.5-5$\mu$m; the content of the capsule core is within the range of 27-53wt.%, and the content of the capsule wall is within the range of 47-73wt.%, based on the total weight of the microcapsule.

In other specific embodiments of the invention, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is 1±0.1;

The thickness of the capsule wall is within the range of 0.5-5$\mu$m; the content of the capsule core may be within the range of 27-53wt.%, and the content of the capsule wall may be within the range of 47-73wt.%, based on the total weight of the microcapsule;

The active component is a healant for self-repairing of pavement cracks and/or an inhibitor for inhibiting the release of an asphalt flue gas;

The capsule wall comprises an inner layer made of resin and an outer layer made of rubber material, and the mass ratio of the inner layer to the outer layer is (2.4-5): 1.

In other specific embodiments of the present invention, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is 1±0.1;

The thickness of the capsule wall is within the range of 0.5-5$\mu$m; the content of the capsule core may be within the range of 30-40wt.%, and the content of the capsule wall ma be within the range of 60-70wt. %, based on the total weight of the microcapsule;

The active component is a healant for self-repairing of pavement cracks (e.g., an aromatic hydrocarbon-rich component);

The capsule wall comprises an inner layer made of melamine resin and an outer layer made of rubber material, and the mass ratio of the inner layer to the outer layer is (2.4-5): 1.

In other specific embodiments of the invention, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is 1$\pm$0.1;
The thickness of the capsule wall is within the range of 0.5-1.5$\mu$m;
The active component is an inhibitor for inhibiting the release of an asphalt flue gas (e.g., aldehyde compounds, ketone compounds, alcohol compounds, phenol compounds and ester compounds);
The capsule wall comprises an inner layer made of melamine resin and an outer layer made of rubber material;
The mass ratio of the capsule core, the inner layer and the outer layer is 1: (0.7-1) : (0.2-0.3).

In other specific embodiments of the invention, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is 1$\pm$0.1;
The thickness of the capsule wall is within the range of 2.1-3$\mu$m;
The active component is an inhibitor for inhibiting the release of an asphalt flue gas (e.g. aldehyde compounds, ketone compounds, alcohol compounds, phenol compounds and ester compounds);
The capsule wall comprises an inner layer made of melamine resin and an outer layer made of rubber material;
The mass ratio of the capsule core, the inner layer and the outer layer is 1: (1.2-1.5) : (0.4-0.5).

In yet other specific embodiments of the present invention, the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is 1$\pm$0.1;
The thickness of the capsule wall is within the range of 3.1-5$\mu$m;
The active component is an inhibitor for inhibiting the release of an asphalt flue gas (e.g., aldehyde compounds, ketone compounds, alcohol compounds, phenol compounds and ester compounds);
The capsule wall comprises an inner layer made of melamine resin and an outer layer made of rubber material;
The mass ratio of the capsule core, the inner layer and the outer layer is 1: (1.7-2) : (0.6-0.7).

The present invention further provides a method for preparing the microcapsule, the method comprises the following steps:

(1) Blending an active component, an emulsifier and water to form an oil-in-water emulsion;
(2) Reacting the oil-in-water emulsion with a resin pre-polymer, then filtering, washing and drying to obtain a pre-coat material;
(3) Mixing a rubber material with the pre-coat material in the presence of a volatile solvent, and then mixing the obtained mixture with water, raising the temperature till volatilization of the volatile solvent to prepare a microcapsule.

The mixing process in step (1) may be carried out in a shearing machine, and the operating conditions may comprise: a rotation speed of 2,000-4,000 r/min, and a time of 20-30 min.

The mass ratio of the dosages of the active component, the emulsifier and water in step (1) may be 1: (0.05-0.09): (6-9).

In some embodiments, the operation process in step (1) is conducted by dissolving the active component in water, subsequently adding an emulsifier, and then performing high-speed shear emulsification at a rotational speed of 2,000-4,000 r/min.

In step (2), the pH of the oil-in-water emulsion in step (2) is adjusted to 5 or less, preferably 2-4, before reacting the oil-in-water emulsion with the resin pre-polymer. The reagent used for adjusting the pH may be a conventional inorganic acid solution (e.g., dilute hydrochloric acid).

In step (2), the reaction of the oil-in-water emulsion and the resin pre-polymer is carried out under stirring, the stirring speed may be 400-800 r/min, the reaction temperature may be 60-90°C, and the time may be 1-5h.

In step (2), the filtering process may be suction filtration.

In step (2), the washing process may comprise washing with water and ethanol for two or more times, respectively.

In step (2), the drying may be performed in a drying oven, the drying temperature may be 60-90°C, and the drying time may be 5-10 hours.

In step (2), the resin pre-polymer may be one or more selected from the group consisting of melamine resin pre-polymer, urea formaldehyde resin pre-polymer and polymethylmethacrylate pre-polymer. In a case of preferably, the resin pre-polymer is a melamine resin pre-polymer. The preparation method for the melamine resin pre-polymer may comprise the following steps: dissolving and mixing melamine with a formaldehyde solution and water, adjusting the pH to 7.5-9.5, and then carrying out the reaction under the stirring and constant temperature water bath condition of 60-90°C for 0.5-3.5h. During the preparation process for the melamine resin pre-polymer, formaldehyde solution has a concentration within the range of 30-40 wt.%. The mass ratio of dosages of the melamine, the formaldehyde solution and water may be 1: (2-3): (8-10).

The mass ratio of the dosages of the rubber material, the volatile solvent and water in step (3) may be 1: (10-20): (50-150).

In the method according to the invention, the active component, the resin pre-polymer and the rubber material are used in such amounts that the prepared microcapsule has a capsule core content within the range of 27-53wt.% and a capsule wall content within the range of 47-73wt.%.

In the method of the invention, the active component may be at least one selected from the group consisting of aromatic hydrocarbon-rich component, aldehyde compounds, ketone compounds, alcohol compounds, phenol compounds and ester compounds, or a combination thereof. In particular, the aromatic hydrocarbon-rich component, aldehyde compounds, ketone compounds, alcohol compounds, phenol compounds and ester compounds may be selected from the same compounds as previously described.

In the method of the present invention, the rubber material may be at least one selected from the group consisting of chlorinated rubber, styrene-butadiene rubber and chloroprene rubber.

In the method of the present invention, the emulsifier may be at least one selected from the group consisting sodium stearate, sodium lauryl sulphate, sodium dodecyl benzene sulfonate, cetyl trimethyl ammonium chloride, cetyl trimethyl ammonium bromide, cetyl dimethyl hydroxyethyl ammonium chloride, nonylphenol polyoxyethylene ether, octylphenol polyoxyethylene ether, and cetyl polyoxyethylene ether.

In the method of the invention, the volatile solvent may be at least one selected from the group consisting carbon tetrachloride, methylene dichloride and trichloroethylene.

The present invention also provides a microcapsule prepared with the aforementioned method.

The invention further provides an use of the aforementioned microcapsule in pavement asphalt.

The microcapsule, a preparation method therefor, and a use thereof in the invention will be further described below with reference to examples. The examples are implemented under the premise of the technical solution of the invention, and disclose the detailed embodiments and specific operation process, but the protection scopes of the invention are not limited to the following examples.

Unless otherwise specified in the invention, each of the experimental methods in the following examples was the conventional method in the field. Unless otherwise specified in the invention, each of the experimental materials used in the following examples was commercially available.

Example 1

(1) 1 part by weight of FCC slurry (having a content of aromatic hydrocarbons of 50wt.%) was added into 9 parts by weight of water at 60°C, 0.05 part by weight of cetyl trimethyl ammonium bromide was then added, the materials were subjected to the shear emulsification by a shearing machine with a rotational speed of 2,000 r/min for 30min, an oil-in-water emulsion was formed in the aqueous phase.

(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.

The dilute hydrochloric acid was dropwise added into 1 part by weight of the oil-in-water emulsion, the pH was adjusted to 2, 0.18 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material was obtained.

(3) 0.21 part by weight of chlorinated rubber was dissolved in 1 part by weight of dichloromethane, 1 part by weight of the pre-coat material was added, the raw materials were sufficiently stirred and mixed. The obtained mixture was added into water, stirred at the rotational speed of 500 r/min, the temperature was raised till the solvent was volatilized, a microcapsule A1 having a size of 7-9μm was prepared, its SEM image was as shown in FIG. 1. The test results indicated that the microcapsule had a capsule core content of 30wt.% and a capsule wall content of 70wt.%, the mass ratio of an inner layer to an outer layer in the capsule wall was 3.1:1.

The elastic modulus of the microcapsule A1 was measured as 2.4GPa by using the nano-indentation instrument, the thickness of the capsule wall of the microcapsule A1 was measured as 3.2μm by performing frozen section test on the microcapsule by using a scanning electron microscope, the elastic modulus and the thickness were consistent with the calculation formula $Y = 0.42X^2 - 0.92X + T$.

Example 2

(1) 1 part by weight of waste lubricating oil (having a content of aromatic hydrocarbons of 52wt. %) was added into 7 parts by weight of water at 60°C, 0.06 part by weight of nonylphenol polyoxyethylene ether was then added, the materials were subjected to the shear emulsification by a shearing machine with a rotational speed of 2,500 r/min for 25min, an oil-in-water emulsion was formed in the aqueous phase.

(2) 1 part by weight of melamine, 3 parts by weight of formaldehyde solution having a concentration of 37wt.%, and 10 parts by weight of deionized water were blended and dissolved in a three-neck flask, the pH was adjusted to 7.5, the three-neck flask was then placed in the constant temperature water bath condition of 80°C for reaction and stirring at 600 r/min for 1h, a melamine resin pre-polymer was prepared.

The dilute hydrochloric acid was dropwise added into 1 part by weight of the oil-in-water emulsion, the pH was adjusted to 4, 0.13 part by weight of the prepared melamine resin pre-polymer was slowly and dropwise added into the oil-in-water emulsion, stirred at a rotational speed of 600 r/min, the reaction was carried out at 70°C for 3h, after the completion of the reaction, the resulting mixed solution was subjected to suction filtration, washing with water and ethanol for twice, respectively, and drying in a drying oven at 70°C for 8h, a pre-coat material was obtained.

(3) 0.15 part by weight of chloroprene rubber was dissolved in 3 parts by weight of carbon tetrachloride, 1 part by weight of the pre-coat material was added, the raw materials were sufficiently stirred and mixed. The obtained mixture was added into water, stirred at the rotational speed of 600 r/min, the temperature was raised till the solvent was volatilized, a microcapsule A2 having a size of 4-6μm was prepared. The test results indicated that the microcapsule had a capsule core content of 43wt.% and a capsule wall content of 57wt.%, the mass ratio of an inner layer to an outer layer in the capsule wall was 3.4:1.

The elastic modulus of the microcapsule A2 was measured as 0.7GPa by using the nano-indentation instrument, the thickness of the capsule wall of the microcapsule A2 was measured as 1.5μm by performing frozen section test on the microcapsule by using a scanning electron microscope, the elastic modulus and the thickness were consistent with the calculation formula $Y = 0.42X^2 - 0.92X + T$.

Example 3

(1) 1 part by weight of furfural extract oil (having a content of aromatic hydrocarbons of 53wt.%) was added into 7 parts by weight of water at 60°C, 0.09 part by weight of octylphenol polyoxyethylene ether was then added, the materials were subjected to the shear emulsification by a shearing machine with a rotational speed of 3,000 r/min for 20min, an oil-in-water emulsion was formed in the aqueous phase.

(2) 1 part by weight of melamine, 2 parts by weight of formaldehyde solution having a concentration of 37wt.%, and 9 parts by weight of deionized water were blended and dissolved in a three-neck flask, the pH was adjusted to 8, the three-neck flask was then placed in the constant temperature water bath condition of 70°C for reaction and stirring at 500 r/min for 2h, a melamine resin pre-polymer was prepared.

The dilute hydrochloric acid was dropwise added into 1 part by weight of the oil-in-water emulsion, the pH was adjusted to 3, 0.12 part by weight of the prepared melamine resin pre-polymer was slowly and dropwise added into the oil-in-water emulsion, stirred at a rotational speed of 500 r/min, the reaction was carried out at 65°C for 3h, after the completion of the reaction, the resulting mixed solution was subjected to suction filtration, washing with water and ethanol for twice, respectively, and drying in a drying oven at 90°C for 6h, a pre-coat material was obtained.

(3) 0.2 part by weight of styrene-butadiene rubber was dissolved in 3 parts by weight of methylene dichloride, 1 part by weight of the pre-coat material was added, the raw materials were sufficiently stirred and mixed. The obtained mixture was added into water, stirred at the rotational speed of 700 r/min, the temperature was raised till the solvent was volatilized, a microcapsule A3 having a size of 4-6$\mu$m was prepared. The test results indicated that the microcapsule had a capsule core content of 43wt.% and a capsule wall content of 57wt.%, the mass ratio of an inner layer to an outer layer in the capsule wall was 2.4:1.

The elastic modulus of the microcapsule A3 was measured as 0.6GPa by using the nano-indentation instrument, the thickness of the capsule wall of the microcapsule A3 was measured as 1.4$\mu$m by performing frozen section test on the microcapsule by using a scanning electron microscope, the elastic modulus and the thickness were consistent with the calculation formula $Y = 0.42X^2 - 0.92X + T$.

Example 4

(1) 1 part by weight of furfural extract oil (having a content of aromatic hydrocarbons of 55wt.%) was added into 6 parts by weight of water at 60°C, 0.06 part by weight of sodium dodecyl benzene sulfonate was then added, the materials were subjected to the shear emulsification by a shearing machine with a rotational speed of 4,000 r/min for 20min, an oil-in-water emulsion was formed in the aqueous phase.

(2) 1 part by weight of melamine, 3 parts by weight of formaldehyde solution having a concentration of 37wt.%, and 9 parts by weight of deionized water were blended and dissolved in a three-neck flask, the pH was adjusted to 7.5, the three-neck flask was then placed in the constant temperature water bath condition of 60°C for reaction and stirring at 700 r/min for 2h, a melamine resin pre-polymer was prepared.

The dilute hydrochloric acid was dropwise added into 1 part by weight of the oil-in-water emulsion, the pH was adjusted to 3, 0.11 part by weight of the prepared melamine resin pre-polymer was slowly and dropwise added into the oil-in-water emulsion, stirred at a rotational speed of 500 r/min, the reaction was carried out at 60°C for 5h, after the completion of the reaction, the resulting mixed solution was subjected to suction filtration, washing with water and ethanol for twice, respectively, and drying in a drying oven at 90°C for 6h, a pre-coat material was obtained.

(3) 0.16 part by weight of chlorinated rubber was dissolved in 1.7 parts by weight of methylene dichloride, 1 part by weight of the pre-coat material was added, the raw materials were sufficiently stirred and mixed. The obtained mixture was added into water, stirred at the rotational speed of 800 r/min, the temperature was raised till the solvent was volatilized, a microcapsule A4 having a size of 3-5$\mu$m was prepared. The test results indicated that the microcapsule had a capsule core content of 49wt.% and a capsule wall content of 51wt.%, the mass ratio of an inner layer to an outer layer in the capsule wall was 2.7:1.

The elastic modulus of the microcapsule A4 was measured as 0.5GPa by using the nano-indentation instrument, the thickness of the capsule wall of the microcapsule A4 was measured as 0.7$\mu$m by performing frozen section test on the microcapsule by using a scanning electron microscope, the elastic modulus and the thickness were consistent with the calculation formula $Y = 0.42X^2 - 0.92X + T$.

Example 5

(1) 1 part by weight of vacuum distillate oil from line 4 (having a content of aromatic hydrocarbons of 56wt.%) was added into 6 parts by weight of water at 60°C, 0.08 part by weight of cetyl trimethyl ammonium chloride was then added, the materials were subjected to the shear emulsification by a shearing machine with a rotational speed of 3,000 r/min for 30min, an oil-in-water emulsion was formed in the aqueous phase.

(2) 1 part by weight of melamine, 2 parts by weight of formaldehyde solution having a concentration of 37wt.%, and 9 parts by weight of deionized water were blended and dissolved in a three-neck flask, the pH was adjusted to 8, the three-neck flask was then placed in the constant temperature water bath condition of 90°C for reaction and stirring at 400 r/min for 3.5h, a melamine resin pre-polymer was prepared.

The dilute hydrochloric acid was dropwise added into 1 part by weight of the oil-in-water emulsion, the pH was adjusted to 2, 0.12 part by weight of the prepared melamine resin pre-polymer was slowly and dropwise added into the oil-in-water emulsion, stirred at a rotational speed of 800 r/min, the reaction was carried out at 90°C for 1h, after the completion of the reaction, the resulting mixed solution was subjected to suction filtration, washing with water and ethanol for twice, respectively, and drying in a drying oven at 60°C for 9h, a pre-coat material was obtained.

(3) 0.18 part by weight of chlorinated rubber was dissolved in 5 parts by weight of methylene dichloride, 1 part by weight of the pre-coat material was added, the raw materials were sufficiently stirred and mixed. The obtained mixture was added into water, stirred at the rotational speed of 700 r/min, the temperature was raised till the solvent was volatilized, a microcapsule A5 having a size of 3-6μm was prepared. The test results indicated that the microcapsule had a capsule core content of 46wt.% and a capsule wall content of 54wt.%, the mass ratio of an inner layer to an outer layer in the capsule wall was 2.5:1.

The elastic modulus of the microcapsule A5 was measured as 0.6GPa by using the nano-indentation instrument, the thickness of the capsule wall of the microcapsule A5 was measured as 1.0μm by performing frozen section test on the microcapsule by using a scanning electron microscope, the elastic modulus and the thickness were consistent with the calculation formula $Y = 0.42X^2 - 0.92X + T$.

Example 6

A microcapsule was prepared according to the method of Example 1, except that the melamine pre-polymer was replaced with the urea formaldehyde pre-polymer, wherein the urea formaldehyde pre-polymer was prepared with the following process: 1 part by weight of urea, 2 parts by weight of formaldehyde solution having a concentration of 37wt.%, and 8 parts by weight of deionized water were sufficiently dissolved in a three-neck flask, the pH was adjusted to 9, the three-neck flask was then placed in the constant temperature water bath condition of 60°C for reaction and stirring at 800 r/min for 0.5h, a urea formaldehyde pre-polymer was prepared. A microcapsule A6 having a size of 6-9μm was prepared subsequently. The test results indicated that the microcapsule had a capsule core content of 30wt.% and a capsule wall content of 70wt.%, the mass ratio of an inner layer to an outer layer in the capsule wall was 3.1:1.

The elastic modulus of the microcapsule A6 was measured as 2.1GPa by using the nano-indentation instrument, the thickness of the capsule wall of the microcapsule A6 was measured as 3.1μm by performing frozen section test on the microcapsule by using a scanning electron microscope, the elastic modulus and the thickness were consistent with the calculation formula $Y = 0.42X^2 - 0.92X + T$.

Comparative Example 1

(1) 1 part by weight of FCC slurry (having a content of aromatic hydrocarbons of 50wt.%) was added into 9 parts by weight of water at 60°C, 0.05 part by weight of cetyl trimethyl ammonium bromide was then added, the materials were subjected to the shear emulsification by a shearing machine with a rotational speed of 2,000 r/min for 30min, an oil-in-water emulsion was formed in the aqueous phase.

(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.

The dilute hydrochloric acid was dropwise added into 1 part by weight of the oil-in-water emulsion, the pH was adjusted to 2, 0.18 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, the prepared product was denoted as a microcapsule D1, its size was 5-7μm.

The elastic modulus of the microcapsule D1 was measured as 2.7GPa by using the nano-indentation instrument, the thickness of the capsule wall of the microcapsule D1 was measured as 2.2$\mu$m by performing frozen section test on the microcapsule by using a scanning electron microscope, the elastic modulus and the thickness were not consistent with the calculation formula $Y = 0.42X^2 - 0.92X + T$.

Comparative Example 2

(1) 1 part by weight of FCC slurry (having a content of aromatic hydrocarbons of 50wt.%) was added into 9 parts by weight of water at 60°C, 0.05 part by weight of cetyl trimethyl ammonium bromide was then added, the materials were subjected to the shear emulsification by a shearing machine with a rotational speed of 2,000 r/min for 30min, an oil-in-water emulsion was formed in the aqueous phase.

(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.

The dilute hydrochloric acid was dropwise added into 1 part by weight of the oil-in-water emulsion, the pH was adjusted to 2, 0.18 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material was obtained.

(3) 0.1 parts by weight of chlorinated rubber and 1 part by weight of the pre-coat material were directly added into water, stirred at a rotational speed of 500 r/min, subjected to drying, a microcapsule D2 was obtained, which had a size of 8-10$\mu$m, but the chlorinated rubber could not be wrapped at the outermost layer of the microcapsule in a membrane form.

The elastic modulus of the microcapsule D2 was measured as 2.6GPa by using the nano-indentation instrument, the thickness of the capsule wall of the microcapsule D2 was measured as 4.1$\mu$m by performing frozen section test on the microcapsule by using a scanning electron microscope, the elastic modulus and the thickness were not consistent with the calculation formula $Y = 0.42X^2 - 0.92X + T$.

Test Example 1

The microcapsules prepared in the Examples 1-6 and Comparative Examples 1-2 were subjected to testing.

The East Sea #70 asphalt was added with the microcapsules in an amount of 0.4wt.%. With reference to the ductility testing method stipulated in the China Industry Standard JTG E20-2011 "Standard Test Methods of Bitumen and Bituminous Mixtures for Highway Engineering", the test piece was cut in the middle part and then placed for 24h, the ductility changes before and after the cut were tested, and the healing rate was calculated, the test results were as shown in Table 1.

Healing rate = ductility obtained at 24h after the cut / ductility before the cut

Table 1: ductility test results of the asphalt samples

| | Microcapsule | Elastic modulus of microcapsule (GPa) | Thickness of capsule wall ($\mu$m) | Ductility at 10°C /cm | Healing rate /% |
|---|---|---|---|---|---|
| | Matrix asphalt | - | - | 83 | 17.3 |
| Example 1 | A1 | 2.4 | 3.2 | 79 | 41.6 |
| Example 2 | A2 | 0.7 | 1.5 | 81 | 43.2 |
| Example 3 | A3 | 0.6 | 1.4 | 81 | 44.1 |
| Example 4 | A4 | 0.5 | 0.7 | 82 | 46.5 |
| Example 5 | A5 | 0.6 | 1.0 | 83 | 45.3 |

(continued)

| | Microcapsule | Elastic modulus of microcapsule (GPa) | Thickness of capsule wall (μm) | Ductility at 10°C /cm | Healing rate /% |
|---|---|---|---|---|---|
| Example 6 | A6 | 2.1 | 3.1 | 78 | 40.1 |
| Comparative Example 1 | D1 | 2.7 | 2.2 | 65 | 30.6 |
| Comparative Example 2 | D2 | 2.6 | 4.1 | 69 | 35.5 |

As can be seen from the results of Table 1, the self-repairing efficiency of pavement asphalt materials can be effectively improved by adopting the microcapsules according to the invention, and selecting a healant for self-repairing of pavement cracks as an active component.

Example 7

(1) 1 part by weight of p-methoxy benzaldehyde was added into 9 parts by weight of water at 60°C, 0.05 part by weight of cetyl trimethyl ammonium bromide was then added, the materials were subjected to the shear emulsification by a shearing machine with a rotational speed of 2,000 r/min for 30min, an oil-in-water emulsion was formed in the aqueous phase.

(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.

The dilute hydrochloric acid was dropwise added into 1 part by weight of the oil-in-water emulsion, the pH was adjusted to 2, 0.18 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material was obtained.

(3) 0.21 part by weight of chlorinated rubber was dissolved in 1 part by weight of dichloromethane, 1 part by weight of the pre-coat material was added, the raw materials were sufficiently stirred and mixed. The obtained mixture was added into water, stirred at the rotational speed of 500 r/min, the temperature was raised till the solvent was volatilized, a microcapsule A7 having a size of 7-9μm was prepared. The test results indicated that the microcapsule had a capsule core content of 30wt.% and a capsule wall content of 70wt.%, the mass ratio of an inner layer to an outer layer in the capsule wall was 3.1:1.

The elastic modulus of the microcapsule A7 was measured as 2.1GPa by using the nano-indentation instrument, the thickness of the capsule wall of the microcapsule A7 was measured as 3.0μm by performing frozen section test on the microcapsule by using a scanning electron microscope, the elastic modulus and the thickness were consistent with the calculation formula $Y = 0.42X^2 - 0.92X + T$.

Example 8

(1) 1 part by weight of acetophenone was added into 7 parts by weight of water at 60°C, 0.06 part by weight of nonylphenol polyoxyethylene ether was then added, the materials were subjected to the shear emulsification by a shearing machine with a rotational speed of 2,500 r/min for 25min, an oil-in-water emulsion was formed in the aqueous phase.

(2) 1 part by weight of melamine, 3 parts by weight of formaldehyde solution having a concentration of 37wt.%, and 10 parts by weight of deionized water were blended and dissolved in a three-neck flask, the pH was adjusted to 7.5, the three-neck flask was then placed in the constant temperature water bath condition of 80°C for reaction and stirring at 600 r/min for 1h, a melamine resin pre-polymer was prepared.

The dilute hydrochloric acid was dropwise added into 1 part by weight of the oil-in-water emulsion, the pH was adjusted to 4, 0.13 part by weight of the prepared melamine resin pre-polymer was slowly and dropwise added into the oil-in-water emulsion, stirred at a rotational speed of 600 r/min, the reaction was carried out at 70°C for 3h, after the completion of the reaction, the resulting mixed solution was subjected to suction filtration, washing with water and ethanol for twice, respectively, and drying in a drying oven at 70°C for 8h, a pre-coat material was obtained.

(3) 0.15 part by weight of chloroprene rubber was dissolved in 3 parts by weight of carbon tetrachloride, 1 part by weight of the pre-coat material was added, the raw materials were sufficiently stirred and mixed. The obtained mixture was added into water, stirred at the rotational speed of 600 r/min, the temperature was raised till the solvent was volatilized, a microcapsule A8 having a size of 4-6μm was prepared. The test results indicated that the microcapsule had a capsule core content of 43wt.% and a capsule wall content of 57wt.%, the mass ratio of an inner layer to an outer layer in the capsule wall was 3.4:1.

The elastic modulus of the microcapsule A8 was measured as 0.6GPa by using the nano-indentation instrument, the thickness of the capsule wall of the microcapsule A8 was measured as 1.4μm by performing frozen section test on the microcapsule by using a scanning electron microscope, the elastic modulus and the thickness were consistent with the calculation formula $Y = 0.42X^2 - 0.92X + T$.

Example 9

(1) 1 part by weight of benzyl alcohol was added into 7 parts by weight of water at 60°C, 0.09 part by weight of polyoxyethylene ether was then added, the materials were subjected to the shear emulsification by a shearing machine with a rotational speed of 3,000 r/min for 20min, an oil-in-water emulsion was formed in the aqueous phase.

(2) 1 part by weight of melamine, 2 parts by weight of formaldehyde solution having a concentration of 37wt.%, and 9 parts by weight of deionized water were blended and dissolved in a three-neck flask, the pH was adjusted to 8, the three-neck flask was then placed in the constant temperature water bath condition of 70°C for reaction and stirring at 500 r/min for 2h, a melamine resin pre-polymer was prepared.

The dilute hydrochloric acid was dropwise added into 1 part by weight of the oil-in-water emulsion, the pH was adjusted to 3, 0.12 part by weight of the prepared melamine resin pre-polymer was slowly and dropwise added into the oil-in-water emulsion, stirred at a rotational speed of 500 r/min, the reaction was carried out at 65°C for 3h, after the completion of the reaction, the resulting mixed solution was subjected to suction filtration, washing with water and ethanol for twice, respectively, and drying in a drying oven at 90°C for 6h, a pre-coat material was obtained.

(3) 0.2 part by weight of styrene-butadiene rubber was dissolved in 3 part by weight of dichloromethane, 1 part by weight of the pre-coat material was added, the raw materials were sufficiently stirred and mixed. The obtained mixture was added into water, stirred at the rotational speed of 700 r/min, the temperature was raised till the solvent was volatilized, a microcapsule A9 having a size of 4-6μm was prepared. The test results indicated that the microcapsule had a capsule core content of 43wt.% and a capsule wall content of 57wt.%, the mass ratio of an inner layer to an outer layer in the capsule wall was 2.4:1.

The elastic modulus of the microcapsule A9 was measured as 0.5GPa by using the nano-indentation instrument, the thickness of the capsule wall of the microcapsule A9 was measured as 1.2μm by performing frozen section test on the microcapsule by using a scanning electron microscope, the elastic modulus and the thickness were consistent with the calculation formula $Y = 0.42X^2 - 0.92X + T$.

Example 10

(1) 1 part by weight of 3-propenyl-6-ethoxyphenol was added into 6 parts by weight of water at 60°C, 0.06 part by weight of sodium dodecyl benzene sulfonate was then added, the materials were subjected to the shear emulsification by a shearing machine with a rotational speed of 4,000 r/min for 20min, an oil-in-water emulsion was formed in the aqueous phase.

(2) 1 part by weight of melamine, 3 parts by weight of formaldehyde solution having a concentration of 37wt.%, and 9 parts by weight of deionized water were blended and dissolved in a three-neck flask, the pH was adjusted to 7.5, the three-neck flask was then placed in the constant temperature water bath condition of 60°C for reaction and stirring at 700 r/min for 2h, a melamine resin pre-polymer was prepared.

The dilute hydrochloric acid was dropwise added into 1 part by weight of the oil-in-water emulsion, the pH was adjusted to 3, 0.11 part by weight of the prepared melamine resin pre-polymer was slowly and dropwise added into the oil-in-water emulsion, stirred at a rotational speed of 500 r/min, the reaction was carried out at 60°C for 5h, after the completion of the reaction, the resulting mixed solution was subjected to suction filtration, washing with water and ethanol for twice, respectively, and drying in a drying oven at 90°C for 6h, a pre-coat material was obtained.

(3) 0.16 part by weight of chlorinated rubber was dissolved in 1.7 parts by weight of dichloromethane, 1 part by weight of the pre-coat material was added, the raw materials were sufficiently stirred and mixed. The obtained mixture was added into water, stirred at the rotational speed of 800 r/min, the temperature was raised till the solvent was volatilized, a microcapsule A10 having a size of 3-5μm was prepared. The test results indicated that the microcapsule had a capsule core content of 49wt.% and a capsule wall content of 51wt.%, the mass ratio of an inner layer to an outer layer in the capsule wall was 2.7:1.

The elastic modulus of the microcapsule A10 was measured as 0.4GPa by using the nano-indentation instrument, the thickness of the capsule wall of the microcapsule A10 was measured as 0.8μm by performing frozen section test on the microcapsule by using a scanning electron microscope, the elastic modulus and the thickness were consistent with the calculation formula $Y = 0.42X^2 - 0.92X + T$.

Example 11

(1) 1 part by weight of phenethyl phenylacetate was added into 6 parts by weight of water at 60°C, 0.08 part by weight of cetyl trimethyl ammonium chloride was then added, the materials were subjected to the shear emulsification by a shearing machine with a rotational speed of 3,000 r/min for 30min, an oil-in-water emulsion was formed in the aqueous phase.

(2) 1 part by weight of melamine, 2 parts by weight of formaldehyde solution having a concentration of 37wt.%, and 9 parts by weight of deionized water were blended and dissolved in a three-neck flask, the pH was adjusted to 8, the three-neck flask was then placed in the constant temperature water bath condition of 90°C for reaction and stirring at 400 r/min for 3.5h, a melamine resin pre-polymer was prepared.

The dilute hydrochloric acid was dropwise added into 1 part by weight of the oil-in-water emulsion, the pH was adjusted to 2, 0.12 part by weight of the prepared melamine resin pre-polymer was slowly and dropwise added into the oil-in-water emulsion, stirred at a rotational speed of 800 r/min, the reaction was carried out at 90°C for 1h, after the completion of the reaction, the resulting mixed solution was subjected to suction filtration, washing with water and ethanol for twice, respectively, and drying in a drying oven at 60°C for 9h, a pre-coat material was obtained.

(3) 0.18 part by weight of chlorinated rubber was dissolved in 5 parts by weight of dichloromethane, 1 part by weight of the pre-coat material was added, the raw materials were sufficiently stirred and mixed. The obtained mixture was added into water, stirred at the rotational speed of 700 r/min, the temperature was raised till the solvent was volatilized, a microcapsule A11 having a size of 3-6μm was prepared. The test results indicated that the microcapsule had a capsule core content of 46wt.% and a capsule wall content of 54wt.%, the mass ratio of an inner layer to an outer layer in the capsule wall was 2.5:1.

The elastic modulus of the microcapsule A11 was measured as 0.5GPa by using the nano-indentation instrument, the thickness of the capsule wall of the microcapsule A11 was measured as 0.9μm by performing frozen section test on the microcapsule by using a scanning electron microscope, the elastic modulus and the thickness were consistent with the calculation formula $Y = 0.42X^2 - 0.92X + T$.

Comparative Example 3

The microcapsule was prepared according to the method of Example 7, except that in step (1), the dosage of water was increased to 15 parts by weight, and the dosage of chlorinated rubber was raised to 0.25 part by weight, a capsule D3 was finally prepared, which had a size of 6-8μm.

The elastic modulus of the microcapsule D3 was measured as 3.3GPa by using the nano-indentation instrument, the thickness of the capsule wall of the microcapsule D3 was measured as 3.5μm by performing frozen section test on the microcapsule by using a scanning electron microscope, the elastic modulus and the thickness were not consistent with the calculation formula $Y = 0.42X^2 - 0.92X + T$.

Comparative Example 4

The microcapsule was prepared according to the method of Example 7, except that in step (3), the dosage of chlorinated rubber was reduced to 0.11 parts by weight, and the dosage of melamine resin pre-polymer was increased to 0.23 part by weight, a capsule D4 was finally prepared, which had a size of 5-7μm.

The elastic modulus of the microcapsule D4 was measured as 2.6GPa by using the nano-indentation instrument, the thickness of the capsule wall of the microcapsule D4 was measured as 2.9μm by performing frozen section test on the microcapsule by using a scanning electron microscope, the elastic modulus and the thickness were not consistent with the calculation formula $Y = 0.42X^2 - 0.92X + T$.

Test Example 2

The microcapsules prepared in the Examples 7-11 and Comparative Examples 3-4 were subjected to testing.
The East Sea #70 asphalt was added with the microcapsules in an amount of 0.4wt.%, and then heated under the temperature condition of 163°C for 6h to enrich and collect the asphalt flue gas, which was tested and analyzed by using a gas chromatograph and a total hydrocarbon analyzer, the test results were shown in Table 2.

Table 2: test results of asphalt flue gas

| | | | | Testing immediately after enrichment | | Testing after placing for two weeks | |
|---|---|---|---|---|---|---|---|
| | Microcap sule | Elastic modulus of microcap sule (GPa) | Thickn ess of capsule wall (μm) | Sulfid es /ppm | Total hydrocarb ons /(mg/m$^3$) $\times 10^3$ | Sulfid es /ppm | Total hydrocarb ons /(mg/m$^3$)$\times 10^3$ |
| | Matrix asphalt | - | - | 168 | 4.6 | 165 | 4.3 |
| Example 7 | A7 | 2.1 | 3 | 81 | 3.6 | 79 | 3.4 |
| Example 8 | A8 | 0.6 | 1.4 | 74 | 3.7 | 72 | 3.5 |
| Example 9 | A9 | 0.5 | 1.2 | 70 | 3.4 | 69 | 3.2 |
| Example 10 | A10 | 0.4 | 0.8 | 68 | 3.1 | 65 | 2.8 |
| Example 11 | A11 | 0.5 | 0.9 | 63 | 2.9 | 62 | 2.8 |
| Compara tive Example 3 | D3 | 3.3 | 3.5 | 94 | 4.0 | 93 | 3.9 |
| Compara tive Example 4 | D4 | 2.6 | 2.9 | 93 | 3.9 | 91 | 3.7 |

As can be seen from the results of Table 2, the emission of asphalt flue gas can be effectively reduced and the pollution to the environment is reduced by using the microcapsules according to the present invention and selecting an inhibitor for inhibiting the release of an asphalt flue gas as an active component.
The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

**Claims**

1.    A microcapsule, is **characterized in that** the microcapsule comprises a capsule core and a capsule wall, the capsule core is wrapped in the capsule wall, the capsule core contains an active component, the elastic modulus of the microcapsule and the thickness of the capsule wall satisfy the following formula:

$$Y = 0.42X^2 - 0.92X + T$$

wherein Y is the elastic modulus of the microcapsule, and the unit thereof is GPa; X is the thickness of the capsule wall, and the unit thereof is $\mu$m; and T is $1\pm0.1$;
the elastic modulus of the microcapsule is obtained by performing a mechanical property test on the microcapsule by using a nano-indentation instrument, and the thickness of the capsule wall is obtained by performing frozen section test on the microcapsule by using a scanning electron microscope.

2. The microcapsule according to claim 1, wherein the content of the capsule core is within the range of 27-53wt.%, and the content of the capsule wall is within the range of 47-73wt.%, based on the total weight of the microcapsule.

3. The microcapsule according to claim 1 or 2, wherein the active component is a healant for self-repairing of pavement cracks and/or an inhibitor for inhibiting the release of an asphalt flue gas.

4. The microcapsule according to claim 3, wherein the healant for self-repairing of pavement cracks is an aromatic hydrocarbon-rich component;

preferably, the aromatic hydrocarbon-rich component is at least one selected from the group consisting of fluidized catalytic cracking slurry, vacuum distillate oil from line 4, furfural extract oil and waste lubricating oil;
preferably, the aromatic hydrocarbon-rich component has a content of aromatic hydrocarbons within the range of 45-65wt.%.

5. The microcapsule according to claim 3, wherein the inhibitor for inhibiting the release of an asphalt flue gas is at least one selected from the group consisting of aldehyde compounds, ketone compounds, alcohol compounds, phenol compounds and ester compounds;

preferably, the aldehyde compound is selected from the group consisting of fatty aldehyde having 7 or more carbon atoms and aromatic aldehyde having 6 or more carbon atoms, more preferably at least one selected from the group consisting of p-methyl benzaldehyde, decyl aldehyde, o-carboxy benzaldehyde, p-isopropyl benzaldehyde, cinnamyl aldehyde, p-hydroxy benzaldehyde, p-methoxy benzaldehyde, 2-methyl-3-(3,4-methylene-dioxyphenyl) propyl aldehyde, 3,4-methylene dioxy benzaldehyde, 3-(4-isopropyl phenyl)-2-methyl propyl aldehyde, ethyl vanillin, phenyl acetaldehyde, anisaldehyde, nonadien-2,6-aldehyde, 2,6-dimethyl-2,6-octadienal, vanillin, citronellal, neral, hydroxyl methyl pentyl cyclohexene acetal, p-diethylamino benzaldehyde, and undecylenal;
preferably, the ketone compound is selected from the group consisting of aliphatic ketones having 8 or more carbon atoms and aromatic ketones having 8 or more carbon atoms, more preferably at least one selected from the group consisting of 6-methyl-3,5-heptadiene-2-one, 2-undecanone, acetophenone, ionone, irone, methyl ionone, damascenone and dihydro damascenone;
preferably, the alcohol compound is alcohol with more than 6 carbon atoms, more preferably at least one selected from the group consisting of cinnamyl alcohol, menthol, cis-3,7-dimethyl-2,6-octanedienol, citronellol, geraniol, myrcenol, 2,6,10-trimethyl-2,6,10-dodecatrien-12-ol, lavender alcohol, benzyl alcohol, 2-phenyl ethanol, dihydromyrcenol, tetrahydrogeraniol and neralidol;
preferably, the phenol compound is phenol having 6 or more carbon atoms, more preferably at least one selected from the group consisting of thymol, ethyl maltol, methyl maltol, 3-propenyl-6-ethoxyphenol and isoeugenol;
preferably, the ester compound is ester with more than 7 carbon atoms, more preferably at least one selected from the group consisting of methyl salicylate, methyl cinnamate, ethyl cinnamate, ethyl phenylacetate, methyl phenylacetate, geranyl phenylacetate, phenethyl phenylacetate, isoamyl phenylacetate, benzyl salicylate, p-methylbenzyl acetate, benzyl acetate, isobutyl benzoate, isoamyl salicylate, benzyl cinnamate, phenethylethyl cinnamate, linalyl formate, linalyl acetate, linalyl isobutyrate, menthyl acetate, terpinyl acetate and bornyl acetate.

6. The microcapsule according to any one of claims 1-5, wherein the thickness of the capsule wall is within the range of 0.5-5$\mu$m.

7. The microcapsule according to any one of claims 1-6, wherein the capsule wall comprises an inner layer made of resin and an outer layer made of rubber material;
preferably, the mass ratio of the inner layer to the outer layer is (2.4-5): 1.

8. The microcapsule according to claim 7, wherein the resin is at least one selected from the group consisting of melamine resin, urea formaldehyde resin and polymethyl methacrylate, preferably melamine resin.

9. The microcapsule according to claim 7, wherein the rubber material is at least one selected from the group consisting of chlorinated rubber, styrene-butadiene rubber and chloroprene rubber.

10. The microcapsule according to any one of claims 1-9, wherein the size of the microcapsule is 50μm or less, preferably 20μm or less, more preferably within the range of 3-15μm.

11. A method for preparing the microcapsule, is **characterized in that** the method comprises the following steps:

(1) blending an active component, an emulsifier and water to form an oil-in-water emulsion;
(2) reacting the oil-in-water emulsion with a resin pre-polymer, then filtering, washing and drying to obtain a pre-coat material;
(3) mixing a rubber material with the pre-coat material in the presence of a volatile solvent, and then mixing the obtained mixture with water, raising the temperature till volatilization of the volatile solvent to prepare a microcapsule.

12. The method according to claim 11, wherein the mass ratio of the dosages of the active component, the emulsifier and water in step (1) is 1: (0.05-0.09): (6-9).

13. The method according to claim 11, wherein the pH of the oil-in-water emulsion in step (2) is adjusted to 5 or less, preferably 2-4, before reacting the oil-in-water emulsion with the resin pre-polymer.

14. The method according to claim 11 or 13, wherein the resin pre-polymer in step (2) is a melamine resin pre-polymer;

preferably, the preparation method for melamine resin pre-polymer comprises: dissolving and mixing melamine with a formaldehyde solution and water, adjusting the pH to 7.5-9.5, and then carrying out the reaction under the stirring and constant temperature water bath condition of 60-90°C for 0.5-3.5h;
preferably, the formaldehyde solution has a concentration within the range of 30-40 wt.%;
preferably, the mass ratio of dosages of the melamine, the formaldehyde solution and water is 1: (2-3): (8-10).

15. The method according to claim 11, wherein the mass ratio of the dosages of the rubber material, the volatile solvent and water in step (3) is 1: (10-20): (50-150).

16. The method according to any one of claims 11-15, wherein the active component is at least one selected from the group consisting of aromatic hydrocarbon-rich component, aldehyde compounds, ketone compounds, alcohol compounds, phenol compounds and ester compounds, or a combination thereof.

17. The method according to any one of claims 11-16, wherein the rubber material is at least one selected from the group consisting of chlorinated rubber, styrene-butadiene rubber and chloroprene rubber.

18. The method according to any one of claims 11-16, wherein the emulsifier is at least one selected from the group consisting sodium stearate, sodium lauryl sulphate, sodium dodecyl benzene sulfonate, cetyl trimethyl ammonium chloride, cetyl trimethyl ammonium bromide, cetyl dimethyl hydroxyethyl ammonium chloride, nonylphenol polyoxyethylene ether, octylphenol polyoxyethylene ether, and cetyl polyoxyethylene ether.

19. The method according to any one of claims 11-16, wherein the volatile solvent is at least one selected from the group consisting carbon tetrachloride, methylene dichloride and trichloroethylene.

20. A microcapsule prepared with the method according to any one of claims 11-19.

21. Use of the microcapsule according to any one of claims 1-10 and 20 in pavement asphalt.

FIG. 1

## INTERNATIONAL SEARCH REPORT

| International application No. |
|---|
| **PCT/CN2023/128305** |

**A.    CLASSIFICATION OF SUBJECT MATTER**

B01J13/02(2006.01)i;  C08L95/00(2006.01)i

According to International Patent Classification (IPC) or to both national classification and IPC

**B.    FIELDS SEARCHED**

Minimum documentation searched (classification system followed by classification symbols)

B01J C08L

Documentation searched other than minimum documentation to the extent that such documents are included in the fields searched

Electronic data base consulted during the international search (name of data base and, where practicable, search terms used)

CNABS, CNTXT, DWPI, EPTXT, USTXT, WOTXT, ENTXTC, CNKI, Patentics: 中国石油化工, 中石化, 中石油, 宋乐春, 王兴越, 曹鹏, 李臣泽, 李志军, 沥青, 囊, 皮, 包覆, 包衣, 壳, 壁, 裹, 覆盖, 树脂, 聚甲基丙烯酸甲酯, 橡胶, 胶囊, 颗粒, 粒子, 球, 珠, 微粒, 包裹物, 包覆物, 修复, 裂, asphalt+, bitumen, pitch, +capsul+, particle+, grain+, particul+, granul+, sphere+, pellet+, ball+, bead+, coat+, skin+, shell, inclus+, cover+, resin+, +methyl, methacrylate, rubber, elastomer+

**C.    DOCUMENTS CONSIDERED TO BE RELEVANT**

| Category* | Citation of document, with indication, where appropriate, of the relevant passages | Relevant to claim No. |
|---|---|---|
| Y | CN 103965512 A (TIANGONG UNIVERSITY) 06 August 2014 (2014-08-06) description, paragraphs 3-15 | 1-21 |
| Y | CN 105036613 A (JSTI GROUP) 11 November 2015 (2015-11-11) description, paragraphs 6-33 and 39-43 | 1-21 |
| Y | CN 211772520 U (JIANGSU EASTTRANS ENGINEERING TESTING CO., LTD.) 27 October 2020 (2020-10-27) description, paragraphs 14-18 | 1-21 |
| Y | WO 2020173923 A1 (COMPANIA ESPANOLA DE PETROLEOS, S.A.U. et al.) 03 September 2020 (2020-09-03) description, page 9, line 4 to page 20, line 6 | 1-21 |
| A | CN 114214038 A (CHANG'AN UNIVERSITY) 22 March 2022 (2022-03-22) entire document | 1-21 |
| A | CN 1667045 A (BUSO KAGAKU KOGYO K. K.) 14 September 2005 (2005-09-14) entire document | 1-21 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2023** | **22 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/128305**

| C. | DOCUMENTS CONSIDERED TO BE RELEVANT | |
|---|---|---|
| Category* | Citation of document, with indication, where appropriate, of the relevant passages | Relevant to claim No. |
| A | JP 2023054394 A (KANEKA CORP.) 14 April 2023 (2023-04-14)<br>entire document | 1-21 |
| A | KR 101635323 B1 (ROAD SEAL et al.) 01 July 2016 (2016-07-01)<br>entire document | 1-21 |

Form PCT/ISA/210 (second sheet) (July 2022)

## INTERNATIONAL SEARCH REPORT
### Information on patent family members

International application No.

**PCT/CN2023/128305**

| Patent document cited in search report | | | Publication date (day/month/year) | Patent family member(s) | | | Publication date (day/month/year) |
|---|---|---|---|---|---|---|---|
| CN | 103965512 | A | 06 August 2014 | None | | | |
| CN | 105036613 | A | 11 November 2015 | None | | | |
| CN | 211772520 | U | 27 October 2020 | None | | | |
| WO | 2020173923 | A1 | 03 September 2020 | PT | 2020173923 | B | 08 April 2022 |
| | | | | ES | 2786319 | A2 | 09 October 2020 |
| | | | | ES | 2786319 | R1 | 21 October 2020 |
| | | | | ES | 2786319 | B2 | 13 May 2021 |
| | | | | EP | 3702411 | A1 | 02 September 2020 |
| CN | 114214038 | A | 22 March 2022 | None | | | |
| CN | 1667045 | A | 14 September 2005 | None | | | |
| JP | 2023054394 | A | 14 April 2023 | None | | | |
| KR | 101635323 | B1 | 01 July 2016 | None | | | |

Form PCT/ISA/210 (patent family annex) (July 2022)

**EP 4 744 766 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311125654

- CN 104231642 A